# EUROPÄISCHE PATENTANMELDUNG

(11) **EP 4 261 508 A1**
(43) Veröffentlichungstag der Anmeldung: **18.10.2023**
(21) Anmeldenummer: 23166761.9
(22) Anmeldetag: 05.04.2023
(51) Int. Cl.: G01J 5/07

(54) **VERFAHREN UND VORRICHTUNG ZUR BERÜHRUNGSLOSEN MESSUNG EINER TEMPERATUR**

(30) Priorität: 05.04.2022 DE 102022108152
(71) Anmelder: Testo SE & Co. KGaA, 79822 Titisee-Neustadt (DE)
(72) Erfinder: STALLMANN, Siegfried, 79848 Bonndorf (DE); HECKELMANN, Gerd, 79853 Lenzkirch (DE)
(74) Vertreter: Mertzlufft-Paufler, Cornelius

(57) **Zusammenfassung**

Verfahren und Vorrichtung zur berührungslosen Messung einer Temperatur, insbesondere Pyrometer, vorzugsweise 1-Punkt-Pyrometer. Das Messgerät (1) weist eine Kamera (4) zur Aufnahme eines Bildes (7') einer Umgebung (7) eines Messflecks (9) und Mittel zur Ermittlung und Ausgabe, insbesondere Anzeige, einer Lage des Messflecks in dem Bild auf. Zur Temperaturmessung wird eine Umgebung (7) eines Messflecks (9) als Bild aufgenommen und eine Lage des Messflecks (9) in der Umgebung (7) berechnet und in dem Bild (7') ausgegeben.

## Beschreibung

Die Erfindung umfasst ein Verfahren und eine Vorrichtung zur berührungslosen Messung einer Temperatur.

In der Lebensmittelindustrie und der zugehörigen Logistik ist es gesetzlich erforderlich, Temperaturen schnell und sicher von Lebensmittelprodukten zu erfassen und somit die Qualität, sicherzustellen, insbesondere um festzustellen, ob Lebensmittel unverdorben oder verdorben sind.

Die Temperatur kann berührend oder nicht berührend gemessen werden. Die Wahl des Messprinzips kann vom Produkt abhängig sein. Die erfasste Temperatur kann/wird händisch notiert und in weitere Systeme übertragen werden.

Die erfassten Temperaturen werden dabei jedoch nicht in einen festen Bezug zur Messstelle gebracht. Aus Zeitmangel können erfasste Temperaturen fingiert/gefälscht sein. Weitere Parameter wie Datum, Uhrzeit oder durchführende Person werden ebenfalls nicht erfasst oder nur händisch nachgetragen.

Bei der berührungslosen Temperaturmessung mittels 1-Punkt-Pyrometer sind Falschmessungen möglich, da der Messfleck nicht sichtbar ist. Je nach Lichtverhältnissen oder Oberflächeneigenschaften kann der eingebaute Hilfs-Laser nicht erkannt werden. Der Blick des Anwenders muss zwischen Messobjekt und Display immer wieder hin und her springen.

Aufgabe der Erfindung ist es, die Messwerterfassung und Protokollierung zu vereinfachen und zu verbessern.

Diese Aufgabe wird erfindungsgemäß durch das Verfahren nach Anspruch 1 gelöst. Das Verfahren ist dadurch gekennzeichnet, dass eine Umgebung eines Messflecks als Bild aufgenommen wird und dass eine Lage des Messflecks in der Umgebung berechnet und in dem Bild ausgegeben, insbesondere angezeigt, wird.

Auf diese Weise ist es möglich, den Messfleck in dem aufgenommenen Bild zu betrachten. Es ist daher nicht mehr notwendig, einen Laserpunkt zu beachten und den Blick zwischen dem Messwert und dem Messort hin und her zu wechseln. Da die Umgebung im Bild sichtbar ist, können Fehlmessungen erkannt und sofort korrigiert werden. Die Lichtverhältnisse und Oberflächeneigenschaften haben keinen Einfluss mehr auf die Messdurchführung. Die Messung wird auf diese Weise vereinfacht und Fehler können vermieden werden.

In einer vorteilhaften Ausführung kann das aufgenommene Bild auch Teil eines Videos sein. Auf diese Weise kann der Messfleck in ein Live-Videobild eingeblendet werden, so dass eine permanente Kontrolle des Messortes erfolgen kann.

In einer vorteilhaften Ausführung wird die Messung der Temperatur mit einem Pyrometer, insbesondere einem 1-Punkt-Pyrometer, ausgeführt. Auf diese Weise ist eine einfache punktuelle Temperaturmessung möglich.

In einer Ausführung wird eine Entfernung zum Messfleck ermittelt, insbesondere durch Abstandsmessung. In der Regel divergiert der Messfleck einer Temperaturmesseinrichtung, insbesondere eines Pyrometers. Durch die Abstandsmessung ist es möglich, einen divergierenden Messfleck korrekt in dem Bild darzustellen.

In einer Ausführung ist eine Aufnahmerichtung für das Bild parallel zu einer Messrichtung ausgerichtet. Auf diese Weise ist eine Berechnung des Durchmessers des Messflecks genauer. Zudem wird die Messung vereinfacht, da die Richtung der Messung der Ausrichtung der Bildaufnahme entspricht.

In einer Ausführung wird ein Messergebnis der Messung der Temperatur mit dem Bild verknüpft. Auf diese Weise ist eine einfache Protokollierung eines Temperaturmesswertes gegeben. Der Temperaturmesswert ist dadurch direkt einem Messort und somit einem Messobjekt bildlich zugeordnet. Eine falsche manuelle Protokollierung oder eine nachträgliche Manipulation ist somit erschwert.

In einer Ausführung werden weitere Daten mit dem Bild und/oder mit dem Messergebnis verknüpft, insbesondere wobei die weiteren Daten einen Aufnahmezeitpunkt und/oder einen Benutzer umfassen. Auf diese Weise entsteht ein fester Bezug zwischen erfasstem Objekt, Temperatur, und weiteren Daten wie Datum und Uhrzeit. Durch eine Benutzeranmeldung kann auch der Prüfer der Messung zugeordnet werden. Es ist somit möglich, ein Messprotokoll mit allen wichtigen Informationen zu erstellen und entsprechend zu speichern oder zu übermitteln.

In einer Ausführung wird ein Messergebnis und/oder ein automatisch erstelltes Protokoll gespeichert und/oder an eine Auswerteeinheit übermittelt. Die Übermittlung kann dabei drahtgebunden oder drahtlos, etwa über ein Funknetzwerk, erfolgen.

Insgesamt kann insbesondere durch die Kombination von 1-Punkt-Pyrometer, Entfernungsmessung, Echtbild-Kamera und Display, der Messfleck in Bezug zur Distanz zum Messobjekt in der Größe berechnet werden, und im Display an der richtigen Position im Bild eingeblendet werden. Gleichzeitig kann nun die Temperatur, Datum und Uhrzeit im Bild eingeblendet werden. Durch diese Maßnahme entsteht somit ein fester Bezug zwischen erfasstem Objekt, Temperatur, Datum und Uhrzeit. Durch eine Benutzeranmeldung am Gerät, kann auch der Prüfer der Messung zugeordnet werden. Es ist möglich, einen Bericht mit allen wichtigen Informationen zu erstellen und entsprechend zu speichern oder zu übermitteln.

Die Erfindung umfasst auch ein Messgerät zur berührungslosen Messung einer Temperatur gemäß Anspruch 7. Dieses Messgerät ist gekennzeichnet durch eine Kamera zur Aufnahme eines Bildes einer Umgebung eines Messflecks und Mittel zur Ermittlung und Ausgabe, insbesondere Anzeige, einer Lage des Messflecks in dem Bild.

In einer Ausführung ist das Messgerät ein Pyrometer, vorzugsweise ein 1-Punkt-Pyrometer. Diese Pyrometer sind einfach aufgebaut und kostengünstig.

In einer Ausführung weist das Messgerät Mittel zum Bestimmen des Abstands zum Messfleck auf. Auf diese Weise ist eine genauere Berechnung des Messflecks möglich.

Insbesondere vorteilhaft kann das Messgerät ein Abstandsmessgerät umfassen, etwa ein optisches oder akustisches Distanzmessgerät.

In einer Ausführung weist das Messgerät zusätzliche Mittel zur Erfassung weiterer Daten auf, insbesondere eines Aufnahmezeitpunkts und/oder eines Benutzers. Das Messgerät kann dafür beispielsweise eine Uhr zur Bestimmung der Aufnahmezeit, einen GPS-Empfänger zur genauen Orts- und/oder Zeitbestimmung, eine Benutzerkontensteuerung, einen Temperatursensor zur Bestimmung der Umgebungstemperatur, ein Barometer zur Bestimmung des Umgebungsluftdrucks, einen Luftfeuchtigkeitssensor und/oder weitere Sensoren aufweisen. Auf diese Weise kann ein umfassendes Messprotokoll automatisiert erstellt werden, in dem alle relevanten Daten enthalten sind. Dieses Messprotokoll ist zudem mit dem Bild und dem darin eingezeichneten Messfleck verknüpft, so dass eine fehlerhafte Zuordnung der Messwerte und/oder eine Manipulation verhindert werden kann.

In einer Ausführung weist das Messgerät Mittel zur Ausführung eines erfindungsgemäßen Verfahrens auf.

Die Erfindung ist nachfolgend mit Bezug auf die beiliegenden Ausführungsbeispiele näher erläutert.

### Es zeigt:

- Fig. 1:: ein Blockschaltbild eines erfindungsgemäßen Messgeräts.
- Fig. 2:: eine schematische Darstellung einer Messumgebung, mit einem Messgerät mit einem aufgenommenen Bild und eingeblendetem Messfleck, und
- Fig. 3:: ein beispielhaftes Messprotokoll.

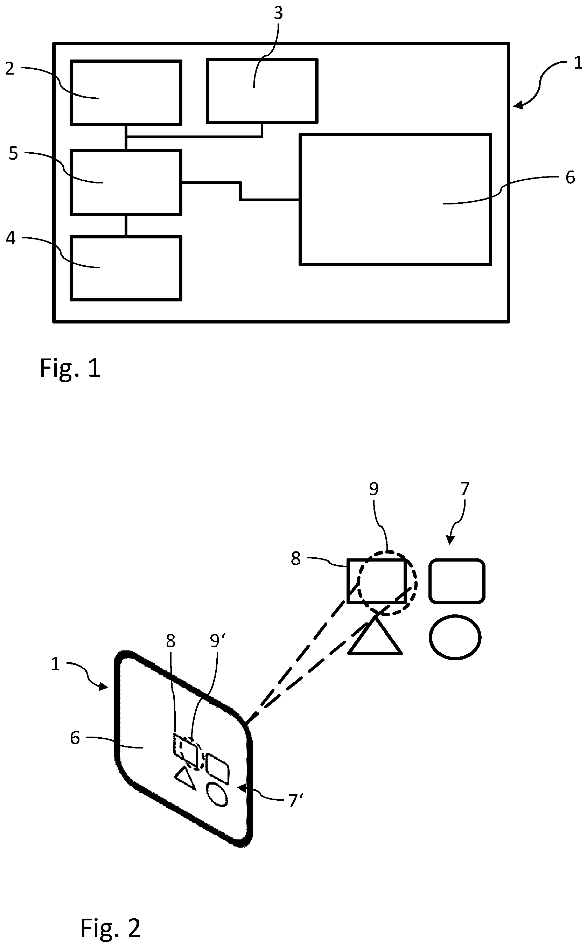

Die Fig. 1 zeigt ein Blockschaltbild eines erfindungsgemäßen Messgeräts 1. Das Messgerät weist einen berührungslosen Temperatursensor 2 auf. Dieser Temperatursensor 2 ist beispielsweise ein 1-Punkt-Pyrometer. Der Temperatursensor 2 kann jedoch auch ein anderes Pyrometer oder Bolometer sein. Der Temperatursensor 2 besitzt einen divergierenden Messfleck. Das bedeutet, dass der Durchmesser des Messflecks mit zunehmenden Abstand zum Messobjekt zunimmt.

Das Messgerät 1 weist weiter ein Abstandsmessgerät 3 auf, das zur Bestimmung eines Abstands zwischen einem Messobjekt und dem Messgerät 1 dient. Das Abstandsmessgerät 3 kann beispielsweise ein optisches oder akustisches Abstandsmessgerät sein oder auf einem anderen Messprinzip beruhen.

Das Messgerät 1 weist weiter eine Kamera 4 auf, die zur Aufnahme eines Bildes der Messumgebung ausgebildet ist. Insbesondere kann die Kamera 4 zur Aufnahme eines Live-Videos ausgebildet sein.

Das Messgerät 1 weist einen Bildschirm 6 auf, auf dem ein aufgenommenes Bild darstellbar ist.

Schließlich weist das Messgerät 1 einen Prozessor 5 oder Mikrocontroller auf, der mit dem Temperatursensor 2, dem Abstandsmessgerät 3 und der Kamera 4 verbunden ist. Der Prozessor 5 ist zur Darstellung des Bildes mit dem Bildschirm 6 verbunden. Der Prozessor 5 ist dazu ausgebildet, aus einer Entfernungsmessung des Abstandsmessgeräts 3 den Durchmesser des Messflecks auf dem Messobjekt zu berechnen und überlagert in ein aufgenommenes Bild einzublenden. Dies kann insbesondere auch in Echtzeit in einem Live-Video der Kamera 4 erfolgen.

Der Prozessor 5 kann zudem dazu ausgebildet sein, weitere Daten, wie Uhrzeit und eine Benutzerkennung zu verarbeiten. Darüber hinaus kann das Messgerät weitere Sensoren und/oder Messgeräte aufweisen, die mit dem Prozessor 5 verbunden sind, um weitere Daten zu verarbeiten.

Der Prozessor 5 ist weiter dazu ausgebildet, ein erfindungsgemäßes Verfahren auszuführen, das nachfolgend genauer erläutert wird.

Die Fig. 2 zeigt beispielhaft eine Umgebung 7, in der eine Temperaturmessung durchgeführt wird, beispielsweise mit einem Messgerät 1 gemäß der Fig. 1. Diese Umgebung 7 kann beispielsweise im Wareneingang eines Lebensmittelladens angesiedelt sein. Am Wareneingang sind verschiedene Lebensmittel 8, dargestellt durch die verschiedenen Formen, angeliefert worden. Mit dem Messgerät 1 wird nun gemäß dem erfindungsgemäßen Verfahren ein Bild 7' der Umgebung 7 aufgenommen. Das aufgenommene Bild 7' wird auf dem Bildschirm 6 dargestellt.

Eine Temperaturmessung erfolgt mit dem Temperatursensor 2. Dieser besitzt einen Messfleck 9, der gestrichelt in der Umgebung 7 dargestellt ist.

Mit Hilfe des Abstandsmessgeräts 3 des Messgeräts 1 wird der Abstand zwischen Messgerät 1 und dem Messobjekt 8 in der Umgebung 7 bestimmt.

Aus dem Abstand und der bekannten Divergenz des Messflecks wird, etwa im Prozessor 5, der tatsächliche Durchmesser des Messflecks am Messobjekt 8 berechnet.

Schließlich wird der Messfleck 9 als virtueller Messfleck 9' mit dem berechneten Durchmesser in dem Bild 7' dargestellt. Das Ergebnis der Temperaturmessung wird mit dem Bild und dem genauen Messort verknüpft und kann zusätzlich mit weiteren Daten, die eventuell am Prozessor 5 vorliegen, verknüpft werden.

Selbstverständlich kann eine Verknüpfung mit weiteren Daten, etwa der Uhrzeit, auch außerhalb des Messgeräts 1 erfolgen, beispielsweise in einer Auswerteeinheit, an die eventuell die Messwerte übermittelt werden. Die Auswerteeinheit kann auch mit dem Messgerät eine Einheit bilden, so dass nur ein Gerät notwendig ist.

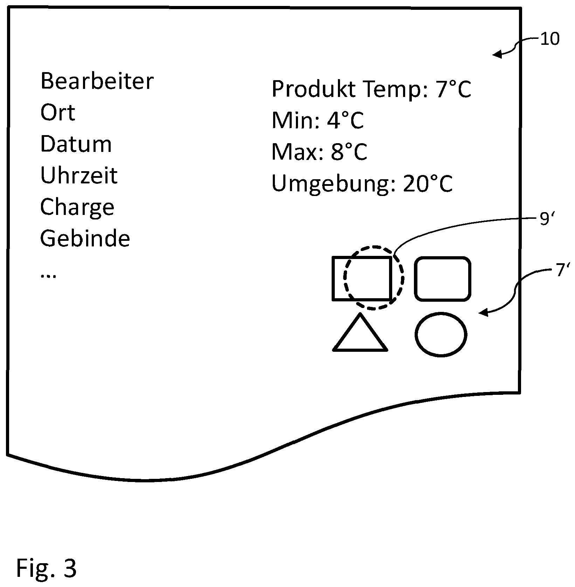

Die Fig. 3 zeigt beispielhaft ein Messprotokoll 10, das mit einem erfindungsgemäßen Verfahren erstellt wurde.

Das Messprotokoll 10 beinhaltet im Beispiel ein aufgenommenes Bild 7', in das der virtuelle Messfleck 9' eingeblendet ist. Weiterhin sind enthalten ein dem Messfleck zugeordneter Temperaturmesswert, eine Umgebungstemperatur, eine Uhrzeit, ein Datum, Temperaturgrenzwerte, ein Benutzer, der Ort der Messung, Chargen- und Gebindebezeichnungen und eventuell weitere Daten.

Auf diese Weise entsteht somit ein fester Bezug zwischen erfasstem Objekt, Temperatur, Datum und Uhrzeit. Durch eine Benutzeranmeldung am Gerät, ist auch der Prüfer der Messung zugeordnet. Das Messprotokoll enthält alle wichtigen Informationen und kann entsprechend gespeichert oder übermittelt werden. Die Probennahme ist auf diese Weise vereinfacht und weniger fehleranfällig.

### Bezugszeichenliste

- 1: Messgerät
- 2: Temperatursensor
- 3: Abstandsmessgerät
- 4: Kamera
- 5: Prozessor
- 6: Bildschirm
- 7: Umgebung
- 7': Bild der Umgebung
- 8: Lebensmittel
- 9: Messfleck
- 9': virtueller Messfleck
- 10: Messprotokoll

## Patentansprüche

1. Verfahren zur berührungslosen Messung einer Temperatur,
**dadurch gekennzeichnet, dass** eine Umgebung (7) eines Messflecks (9) als Bild aufgenommen wird und dass eine Lage des Messflecks (9) in der Umgebung (7) berechnet und in dem Bild (7') ausgegeben, insbesondere angezeigt, wird.

2. Verfahren nach Anspruch 1, **dadurch gekennzeichnet, dass** eine Entfernung zum Messfleck (9) ermittelt wird, insbesondere durch Abstandsmessung.

3. Verfahren nach einem der vorangehenden Ansprüche, **dadurch gekennzeichnet, dass** eine Aufnahmerichtung für das Bild (7') parallel zu einer Messrichtung ausgerichtet ist.

4. Verfahren nach einem der vorangehenden Ansprüche, **dadurch gekennzeichnet, dass** die Messung der Temperatur mit einem Pyrometer (2), insbesondere einem 1-Punkt-Pyrometer, ausgeführt wird.

5. Verfahren nach einem der vorangehenden Ansprüche, **dadurch gekennzeichnet, dass** ein Messergebnis der Messung der Temperatur mit dem Bild (7') verknüpft wird.

6. Verfahren nach einem der vorangehenden Ansprüche, **dadurch gekennzeichnet, dass** weitere Daten mit dem Bild und/oder mit dem Messergebnis verknüpft werden, insbesondere wobei die weiteren Daten einen Aufnahmezeitpunkt und/oder einen Benutzer umfassen.

7. Messgerät (1) zur berührungslosen Messung einer Temperatur, insbesondere Pyrometer, vorzugsweise 1-Punkt-Pyrometer, **gekennzeichnet durch** eine Kamera (4) zur Aufnahme eines Bildes (7') einer Umgebung (7) eines Messflecks (9) und Mittel zur Ermittlung und Ausgabe, insbesondere Anzeige, einer Lage des Messflecks in dem Bild.

8. Messgerät (1) nach Anspruch 7, **dadurch gekennzeichnet, dass** das Messgerät Mittel zum Bestimmen des Abstands zum Messfleck (9) aufweist, insbesondere ein Abstandsmessgerät (3) .

9. Messgerät (1) nach Anspruch 7 oder 8, **dadurch**
**gekennzeichnet, dass** das Messgerät (1) Mittel zur Erfassung weiterer Daten aufweist, insbesondere eines Aufnahmezeitpunkts und/oder eines Benutzers.

10. Messgerät (1) nach einem der Ansprüche 7 bis 9, **dadurch gekennzeichnet, dass** Mittel zur Ausführung eines Verfahrens nach einem der Ansprüche 1 bis 6 ausgebildet sind.
